# EUROPÄISCHE PATENTSCHRIFT

(11) **EP 0 609 193 B1**
(45) Veröffentlichungstag und Bekanntmachung des Hinweises auf die Patenterteilung: **09.12.1998**
(21) Anmeldenummer: 94890012.1
(22) Anmeldetag: 19.01.1994
(51) Int. Cl.: G01N 15/08, F16D 65/00, F16D 69/00, G01N 25/72

(54) **Verfahren und Einrichtung zur Messung der Porosität von Reibbelägen**
Method and device for measuring porosity of friction linings
Méthode et appareil pour mesurer la porosité des garnitures de friction

(30) Priorität: 26.01.1993 AT 122/93
(43) Veröffentlichungstag der Anmeldung: 03.08.1994
(73) Patentinhaber: HOERBIGER Antriebstechnik GmbH, 86956 Schongau (DE); PHOTOTHERM Dr. PETRY GmbH, 66115 Saarbrücken (DE)
(72) Erfinder: Petry, Harald, Dr., D-66130 Saarbrücken (DE); Wagner, Dagobert, D-86919 Utting (DE)
(74) Vertreter: Pinter, Rudolf, Dipl.-Ing.

(56) Entgegenhaltungen:
- EP-A- 0 347 641
- WO-A-82/00891
- US-A- 3 434 332

## Beschreibung

Die Erfindung betrifft ein Verfahren zur zerstörungsfreien Messung bzw. Prüfung der Porosität von Reibbelägen.

Der bekanntermaßen wesentliche Einfluß der Porosität von Reibbelagsprodukten, wie etwa Kupplungs- oder Bremsscheiben, bzw. Synchronisier-Lamellen oder dergleichen, auf deren Reibverhalten hat zwangsläufig in letzter Zeit die Frage nach einem geeigneten Prüfverfahren der Dichte bzw. Porosität laut werden lassen. Insbesonders ist bei den in Öl laufenden Reibbelägen der genannten Art die Porosität und Oberflächenstruktur von ausschlaggebender Bedeutung für das Reib- und Verschleißverhalten, da davon die Ausbildung des oberflächlichen Ölfilmes sehr stark geprägt wird. Weiters ist auch das in den offen Poren der Reibflächen enthaltene Ölvolumen wichtig für die Schmierung und Kühlung der Reibfläche, was wiederum bestimmend für das Verschleißverhälten ist. Die Komplexität des tribologischen Systems erfordert demnach eine möglichst exakte Prüfmöglichkeit für alle das Reibungssystem bestimmenden Parameter, weshalb eine möglichst exakte Definition und Prüfmöglichkeit auch für die Oberflächenstruktur und Qualität der jeweils eingesetzten Reibbelagswerkstoffe angestrebt wird.

Die bisher bekannten Verfahren der Porositätsbestimmung sind insgesamt nicht oder nur bedingt für Reibbelagsprodukte, und hier insbesonders für die heutzutage immer stärker verwendeten Sinterreibbelagsprodukte, geeignet, da entweder aufgrund der hohen Oberflächenporosität nur Mittelwerte mit starken Streuungen gemessen (Öl-Tränkverfahren nach DIN 30911, Quecksilber-Intrusion usw.) oder aber nur kleine Ausschnitte in Form von Schliffen überprüft werden konnten (Lichtmikroskopie, REM, usw.). Weiters läßt auch die in jüngster Zeit mehrfach erprobte fotoelektrische Reflexionsmessung keine ausreichend genaue Aussage über die tatsächlich vorhandene Porosität zu, da sie ausschließlich das Reflexionsverhalten der Oberfläche bewertet, das aber auch von anderen Umständen entscheidend beeinflußt wird. Insbesonders neigen die charakteristischen Zusammensetzungen von Sinter-Reibbelägen sehr zu oxidativer, farblicher Veränderung der Oberfläche, was die Aussagekraft der Reflexionsmessung stark beeinträchtigt.

Aufgabe der vorliegenden Erfindung ist es, ein Verfahren der eingangs genannten Art so zu verbessern, daß die erwähnten Nachteile der bekannten Verfahren vermieden werden und daß insbesonders auf einfache und aussagekräftige Weise die Porosität von Reibbelägen gemessen bzw. überprüft werden kann.

Diese Aufgabe wird gemäß der Erfindung bei einem Verfahren der genannten Art dadurch gelöst, daß ein Bereich des zu prüfenden Reibbelages periodisch durch elektromagnetische Strahlung oberflächlich erwärmt wird, daß vom erwärmten Bereich emittierte IR-Strahlung hinsichtlich ihrer Phase und Amplitude detektiert und in entsprechende elektrische Meßsignale umgewandelt wird und daß diese Meßsignale als Maß für die Porosität des erwärmten Bereiches ausgewertet werden.

Eine Einrichtung zur Durchführung dieses Verfahrens weist eine auf die Oberfläche des zu prüfenden Reibbelages gerichtete Quelle elektromagnetischer Strahlung, eine Unterbrechereinheit zu periodischen Unterbrechung der auf den Reibbelag gelangenden Strahlung, einen IR-Detektor zur Detektierung der vom durch die Strahlung erwärmten Reibbelag ausgesandten IR-Strahlung hinsichtlich ihrer Phase und Amplitude und Umwandlung in elektrische Meßsignale, und eine Auswerteeinheit, in der diese Meßsignale als Maß für die Porosität des erwärmten Bereiches ausgewertet werden, auf.

Die Erfindung geht damit also aus von einer vorteilhaften Ausnutzung des bekannten Prinzips der sogenannten photothermischen Messungen (siehe dazu beispielsweise WO-82/00891-A). Dabei wird ein zu prüfendes Substrat periodisch mit elektromagnetischer Strahlung, insbesonders Licht, beaufschlagt, wonach die dadurch in den oberflächennahen Schichten erzeugten Wärmesignale mittels IR-Detektor erfaßt und ausgewertet werden. Die Amplitude des erfaßten Meßsignals ist dabei im wesentlichen eine Funktion der Anregungsintensität, des Absorptionsvermögens der Oberfläche und der Emissivität im IR-Bereich, der Modulationsfrequenz, der thermischen Werkstoffeigenschaften sowie der üblicherweise konstanten Geräteparameter. Die endliche Ausbreitungsgeschwindigkeit der thermischen Wellen führt zudem zu einer Phasenverschiebung der Temperaturoszillation in der Tiefe verglichen mit der Oberfläche, wobei Streuungen und Inhomogenitäten im Material zwangsläufig einen erheblichen Einfluß auf diese Phasenverschiebung haben. Die Phase der aufgenommenen IR-Strahlung enthält somit wichtige Informationen über die Struktur des Subtrats und ist zudem vom Absorptionsverhalten (Farbe) der Oberfläche praktisch unabhängig, was im vorliegenden Anwendungsfall - wie oben angesprochen - besondere Bedeutung hat.

Bei der Messung bzw. Überprüfung von Porosität mittels photothermischer Methoden (siehe z.B. US-A-3,434,332 oder auch EP-A-O 347 641) wird die Tatsache ausgenützt, daß die thermischen Eigenschaften jedes Reibmaterials insbesonders durch Poren beeinflußt werden. Jede Erhöhung bzw. Verringerung des gesamten Porenvolumens führt zwangsläufig zu einer Änderung der Wärmekapazität, der Wärmeleitfähigkeit und natürlich der Dichte des Reibmaterials. Es ist demnach also möglich, mit photothermischen Methoden die für die Reibeigenschaften wesentliche Porosität von Reibbelägen einfach, schnell und genau zu bestimmen bzw. zu überprüfen, wobei die gesamte Reibbelagsoberfläche erfaßt werden kann, farbliche Unterschiede (z.B. aufgrund oxidativer Veränderungen) der Oberfläche praktisch keinen Einfluß aut das Meßergebnis haben und die Oberflächenporosität und die Tiefen- bzw. Gesamtporosität getrennt erfaßt werden können (mittels der später noch angesprochenen Änderung der Modulationsfrequenz der anregenden Strahlung und der damit einhergehenden Änderung von deren Eindringtiefe), was wesentlich ist, da aufgrund der üblicherweise angewandten Fertigungstechnik beide Bereiche starke Differenzen aufweisen können.

Obwohl grundsätzlich sowohl der Phasen- als auch der Amplitudenmeßwert der rückgestrahlten IR-Strahlung als einzelner Wert aussagekräftig ist, ist in besonders bevorzugter Ausgestaltung des erfindungsgemäßen Verfahrens vorgesehen, daß bei der Auswertung der Meßsignale von Phase und Amplitude der IR-Strahlung vorerst beide Meßsignale normiert werden, worauf dann die Summe aus normiertem Phasen-Meßwert und invertiertem normiertem Amplitudenmeßwert gebildet und daraus durch Halbieren das Maß für die Porosität ermittelt wird. Unter Normieren ist dabei zu verstehen, daß der maximale Meßwert von Phase und Amplitude jeweils gleich 1 gesetzt wird; das Invertieren der Amplitude ist identisch mit der Bildung des Kehrwertes.

Da Phase und Amplitude im vorliegenden Zusammenhang zwei physikalisch unabhängige Größen repräsentieren, kann durch deren mathematische Verknüpfung wie erwähnt eine verbesserte Ergebnisdarstellung erreicht werden. Insbesonders läßt sich auf diese Weise die im Bereich geringer Dichten (bzw. großer Porositäten) unter Umständen auftretende Unstetigkeit eines der gemessenen Signale leicht ausgleichen, wobei das wie beschrieben als Maß für die Porosität ermittelte Signal wieder stetig wird.

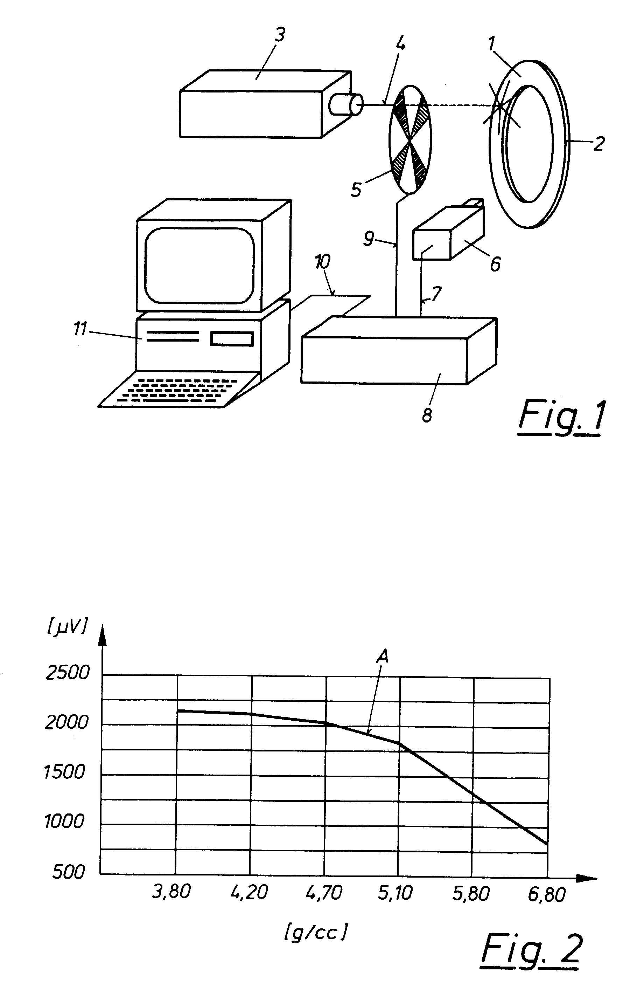

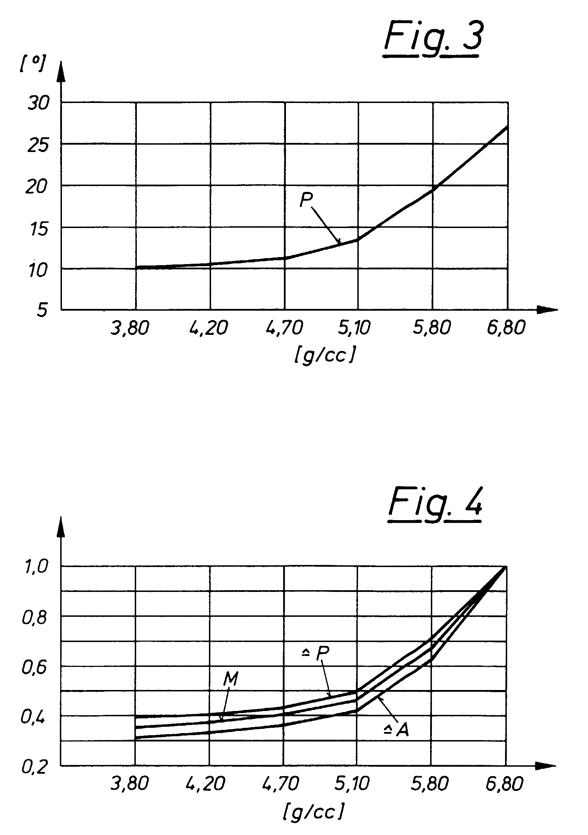

Weitere vorteilhafte Merkmale und Ausgestaltungen des erfindungsgemäßen Verfahrens sind in den Patentansprüchen angeführt und werden zusammen mit den grundsätzlichen Ausgestaltungen der Erfindung im folgenden anhand der exemplarischen Zeichnungen näher beschrieben. Fig. 1 zeigt dabei den grundsätzlichen Aufbau einer Meßeinrichtung zur Durchführung des Verfahrens nach der vorliegenden Erfindung, Fig. 2 zeigt ein Beispiel für den Verlauf der Amplitude A der rückgestrahlten IR-Strahlung in µV über der zugehörigen Dichte des geprüften Reibbelages in g/cm³, Fig. 3 zeigt ein entsprechendes Diagramm mit der Phasenverschiebung P der IR-Strahlung in Grad über der Dichte in g/cm³ und Fig. 4 zeigt die zu Fig. 2 und 3 zugehörigen normierten bzw. normierten und invertierten Meßsignale zusammen mit dem daraus auf oben beschriebene Weise ermittelten Signalverlauf M als Maß für die Porosität bzw. Dichte.

Die Einrichtung nach Fig. 1 dient zur zerstörungsfreien Messung der Porosität bzw. Dichte von Reibbelägen, wie sie beispielsweise in Form eines Sinterreibbelages 1 auf einem Synchronring 2 oder dergleichen aufgebracht sind. Eine auf die Oberfläche des zu prüfenden Reibbelages 1 gerichtete Quelle 3 elektromagnetischer Strahlung, vorzugsweise ausgebildet als JR-Laser mit einer Emissionswellenlänge im Bereich von 790 - 820 nm, erzeugt einen Strahl 4, der mittels einer Unterbrechereinheit 5, hier ausgebildet als drehende Scheibe mit abwechselnd durchsichtigen und undurchsichtigen Sektoren, periodisch unterbrochen bzw. moduliert auf den Reibbelag 1 gelangt. Weiters ist ein IR-Detektor 6 zur Detektierung der vom durch die Strahlung erwärmten Reibbelag 1 ausgesandten IR-Strahlung hinsichtlich Ihrer Phase und Amplitude und zur Umwandlung dieser Strahlung in elektrische Meßsignale vorgesehen, der über eine Signalleitung 7 mit einer Verstärkereinheit 8 in Verbindung steht, welche über eine Leitung 9 auch die Unterbrechereinheit 5 steuert.

Über eine Verbindungsleitung 10 ist die Verstärkereinheit 8 schließlich noch ausgangsseitig mit einer hier als Computer 11 ausgebildeten Auswerteeinheit verbunden, in der die Meßsignale für Phase bzw. Amplitude der detektierten IR-Strahlung als Maß für die Porosität bzw. Dichte des erwärmten Bereiches auf dem Reibbelag 1 ausgewertet werden.

Nicht dargestellt sind hier der Einfachheit halber die Anordnungen bzw. Vorrichtungen zum Einspannen des Synchronringes 2 bzw. zum Bewegen desselben relativ zur Quelle 3 bzw. zum IR-Detektor 6, die zufolge dieser Relativbewegung ein sequentielles Abtasten des gesamten Reibbelages 1 auf dem Synchronring 2 bzw. der jeweils interessierenden Bereiche davon ermöglichen. Es ist dabei belanglos, ob der Synchronring 2 festgehalten wird und mit Quelle 3 und IR-Detektor der jeweils zu untersuchende Bereich eingestellt wird, oder ob Quelle 3 und IR-Detektor 6 feststehen und das Prüfobjekt bewegt bzw. rotiert wird.

Die entweder mittels Modulation der Quelle 3, oder aber durch periodische Abschattung der Quelle 3 - wie dargestellt mittels der Unterbrechereinheit 5 - bewirkte Periodizität der Erwärmung des zu prüfenden Bereiches auf dem Reibbelag 1 liegt größenordnungsmäßig im Bereich von 1 bis 5000 sec⁻¹. Der jeweils bestrahlte bzw. erwärmte Bereich liegt in der Größenordnung von 1 mm Durchmesser.

Abhängig von der Modulationsfrequenz der anregenden Quelle und den vorhandenen Materialkonstanten lassen sich unterschiedliche Eindringtiefen am zu prüfenden Reibbelag erzielen, was auch unmittelbar Auswirkungen auf die Meßgeschwindigkeit hat. Unter Berücksichtigung der für Reibbelagselemente spezifischen Anforderungen und der erforderlichen bzw. ausreichenden Meßgenauigkeit hat sich im praktischen Betrieb eine Meßfrequenz von beispielsweise 20 bis 33 sec⁻¹ bei dem erwähnten Meßpunktdurchmesser von ca. 1 mm als ideal erwiesen. Bei diesen Vorgaben folgen etwa 1200 bis 2000 Meßpunkte pro Minute bzw. etwa 950 bis 1500 mm²/min an überprüfter Reibbelagsoberfläche bei einer Meßgenauigkeit von etwa ± 0,02 bis 0,03 g/cm³, was normalerweise wesentlich besser als die geforderten Werte hinsichtlich der Dichtevariation (etwa 0,1 g/cm³) ist. Durch eine Erhöhung der Meßfrequenz wird zwar die Meßgeschwindigkeit erhöht, jedoch die Eindringtiefe herabgesetzt. Andererseits kann die Meßgeschwindigkeit auch durch eine Vergrößerung des einzelnen beleuchteten und überprüften Bereiches erhöht werden, was aber das Auflösungsvermögen der Messung beeinträchtigt. Nach unten hin sind für die Größe des einzelnen jeweils überprüften Bereiches Grenzen durch die Korngröße des Reibbelagmaterials gesetzt, nach deren Unterschreiten die Messungen an Signifikanz verlieren.

Die Diagramme nach den Fig. 2 bis 4 wurden mit einer Meßanordnung nach Fig. 1 aufgenommen, wobei auf beschriebene Weise ein JR-Laser mit einer Emissionswellenlänge im Bereich von 790 bis 820 nm und einer Ausgangsleistung von 10 bis 500 mV verwendet wurde. Die Entfernung von der Austrittsoptik der Quelle 3 bis zur Oberfläche des zu prüfenden Reibbelages 1 betrug etwa 20 mm, was in der Praxis zu einer Temperaturerhöhung der jeweils geprüften Reibbelagsoberfläche von <10°K führt.

Da die Wärmeleitfähigkeit und die Wärmekapazität einer porösen Substanz mit zunehmender Dichte (abnehmender Porosität) ebenfalls zunimmt, ist mit einer Zunahme der Amplitude A bei abnehmender Dichte zu rechnen, wie dies auch als Ergebnis der tatsächlichen Messungen in Fig. 2 dargestellt ist.

Umgekehrt steigt gemäp den Erwartungen und entsprechend Fig. 3 mit zunehmender Dichte die Phasenverschiebung P, wobei allerdings nach hier nicht mehr dargestellten Überschreitung einer kritischen Dichte zufolge einer exzessiven Dämpfung eine Unstetigkeit bzw. Umkehrung dieses Verlaufes auftritt.

Um die Meßgenauigkeit und Aussagekraft auf einfache Weise zu erhöhen, können gemäß Fig. 4 vorerst beide Meßsignale (A bzw. P gemäß Fig. 2 und 3) normiert werden, worauf dann die Summe aus normiertem Phasen-Meßwert (P) und invertiertem, normiertem Amplitudenmeßwert (A) gebildet und daraus durch Halbieren das Maß (M) für die Porosität bzw. Dichte ermittelt wird.

Bezogen auf die Dichtewerte gemäß Fig. 4 liegen die in der Produktion beispielsweise von Synchronringen brauchbaren Reibbelagdichten im Bereich von etwa 4,7 bis 5,2 g/cm³, was einen Wertebereich für M von etwa 0,4 bis 0,5 bedeutet.

Abgesehen von den Darstellungen der Diagramme nach Fig. 2 bis 4 bietet die beschriebene photothermische Untersuchungsmethode erstklassige Möglichkeiten einer optischen Ergebnisdarstellung. Sowohl unmittelbar durch Wärmebilder als auch durch Falschfarbendarstellung lassen sich Bereiche und Verteilung von Dichte bzw. Porosität sehr leicht und eindrucksvoll quantifizieren und auswerten. Besonders vorteilhaft ist dabei die Möglichkeit, Meßergebnisse, etwa auf dem Bildschirm des Computers 11, quasi 3-dimensional wiederzugeben, womit sich eine äußerst plastische und anschauliche Darstellung der Dichteverteilung erzielen läßt. Für Qualitätssicherung und dergleichen kommt allerdings eher eine komplette Darstellung des jeweils geprüften Reibbelagselementes (Synchronring 2 gemäß Fig. 1) in Frage, die mittels der oben angesprochenen Falschfarbendarstellung dann eine direkte Gut/Schlecht-Sortierung ermöglicht.

Zusätzlich zu der beschriebenen Auswertung von Phase bzw. Amplitude der vom jeweils geprüften Bereich ausgesandten IR-Strahlung kann natürlich auch bedarfsweise unmittelbar die optische Reflexion der auf den zu prüfenden Bereich auftreffenden Strahlung mit zur Analyse verwendet werden, soferne nicht negative Beeinflussungen durch die bereits angesprochenen oxidativen Reaktionen der Oberfläche entgegenstehen.

## Patentansprüche

1. Verfahren zur zerstörungsfreien Messung der Porosität von Reibbelägen, **dadurch gekennzeichnet,** daß ein Bereich des zu prüfenden Reibbelages periodisch durch elektromagnetische Strahlung oberflächlich erwärmt wird, daß vom erwärmten Bereich emittierte IR-Strahlung hinsichtlich ihrer Phase und Amplitude detektiert und in entsprechende elektrische Meßsignale umgewandelt wird und daß diese Meßsignale als Maß für die Porosität des erwärmten Bereiches ausgewertet werden.

2. Verfahren nach Anspruch 1, dadurch gekennzeichnet, daß die elektromagnetische Strahlung mittels eines Lasers, vorzugsweise eines JR-Lasers mit einer Emissionswellenlänge im Bereich von 790 - 820 nm, erzeugt wird.

3. Verfahren nach Anspruch 1 oder 2, dadurch gekennzeichnet, daß die mittels Modulation oder durch periodische Abschattung der Strahlungsquelle bzw. des Lasers bewirkte Periodizität der Erwärmung des zu prüfenden Bereiches in der Größenordnung von 1 - 5000 s⁻¹ liegt.

4. Verfahren nach einem der Ansprüche 1 bis 3, dadurch gekennzeichnet, daß der jeweils bestrahlte bzw. erwärmte Bereich größenordnungsmäßig 1 mm Durchmesser aufweist.

5. Verfahren nach einem der Ansprüche 1 bis 4, dadurch gekennzeichnet, daß bei der Auswertung der Meßsignale von Phase und Amplitude der IR-Strahlung vorerst beide Meßsignale normiert werden, worauf dann die Summe aus normiertem Phasen-Meßwert und invertiertem, normiertem Amplitudenmeßwert gebildet und daraus durch halbieren das Maß für die Porosität ermittelt wird.

## Claims

1. A method of non-destructive measurement of the porosity of friction linings, **characterized in that** an area of the friction lining to be tested is periodically heated on its surface by electromagnetic radiation, infrared radiation emitted by the heated area is detected with respect to its phase and amplitude and is converted into corresponding electrical measurement signals, and the said measurement signals are evaluated as a measure of the porosity of the heated area.

2. A method according to Claim 1, **characterized in that** the electromagnetic radiation is generated by means of a laser, preferably a JR laser with an emission wavelength in the region of from 790 to 820 nm.

3. A method according to Claim 1 or 2, **characterized in that** the periodicity - produced by means of modulation or by periodic shading of the radiation source or the laser - of the heating of the area to be tested is in the order of magnitude of from 1 to 5000 s⁻¹.

4. A method according to one of Claims 1 to 3, **characterized in that** the area respectively radiated or heated has a diameter in the order of magnitude of 1 mm.

5. A method according to one of Claims 1 to 4, **characterized in that** during the evaluation of the measurement signals of the phase and amplitude of the infrared radiation the two measurement signals are first normalized, after which the sum of the normalized phase reading and the inverted normalized amplitude reading is then made, and the measure of the porosity is formed therefrom by halving it.

## Revendications

1. Méthode de mesure non destructive de la porosité de garnitures de friction, caractérisée par le fait que l'on chauffe périodiquement en surface, au moyen d'un rayonnement électromagnétique, une zone de la garniture de friction à examiner, que l'on détecte le rayonnement infrarouge émis par la zone chauffée, en ce qui concerne sa phase et son amplitude et qu'on le convertit en signaux électriques de mesure correspondants et que l'on traite ces signaux de mesure en tant que mesure de la porosité de la zone chauffée.

2. Méthode selon la revendication 1, caractérisée par le fait que l'on produit le rayonnement électromagnétique au moyen d'un laser, de préférence un laser IR d'une longueur d'onde d'émission sur la plage de 790-820 nm.

3. Méthode selon la revendication 1 ou 2, caractérisée par le fait que la périodicité, opérée par la modulation ou par l'occultation périodique de la source de rayonnement ou du laser, de l'échauffement de la zone à examiner est de l'ordre de grandeur de 1 - 500 s⁻¹.

4. Méthode selon l'une des revendications 1 à 3, caractérisée par le fait que la zone chaque fois éclairée ou chauffée présente un diamètre de l'ordre de grandeur de 1 mm.

5. Méthode selon l'une des revendications 1 à 4, caractérisée par le fait que lors du traitement des signaux de mesure de phase et d'amplitude du rayonnement IR, on rend tout d'abord normaux les deux signaux de mesure, après quoi on forme la somme d'une valeur de mesure des phases, rendue normale, et d'une valeur de mesure des amplitudes, inversée et rendue normale. et qu'en divisant par deux, on en détermine la mesure de la porosité.
